# EUROPEAN PATENT APPLICATION

(11) **EP 2 749 799 A1**
(43) Date of publication of application: **02.07.2014**
(21) Application number: 12835134.3
(22) Date of filing: 24.09.2012
(51) Int. Cl.: F16K 31/06, F02M 47/00, F02M 51/06

(54) **SOLENOID ACTUATOR**

(30) Priority: 28.09.2011 JP 2011212352
(71) Applicant: Nabtesco Corporation, Tokyo 102-0093 (JP)
(72) Inventor: TSURU, Nobuyuki, Kobe-shi Hyogo 651-2413 (JP); AKASE, Hiroshi, Kobe-shi Hyogo 651-2413 (JP)
(74) Representative: Hedges, Martin Nicholas
(86) International application number: PCT/JP2012/074358
(87) International publication number: WO 2013/047418

(57) **Abstract**

A coil (68) is housed in a main body (70). An inner cylindrical portion (98a) is disposed inward of the coil (68). An armature (80) adapted to be attracted by the coil (68) is disposed, being spaced from the inner cylindrical portion (98a). A magnetic flux concentrating member (100) is disposed on the side of the coil (68) nearer to the armature (80), being spaced from the inner cylindrical portion (98a). The gap between the inner cylindrical portion (98a) and the magnetic flux concentrating member (100) is larger than the gap between the armature (80) and the inner cylindrical member (100).

## Description

### Technical Field

This invention relates to an electromagnetic actuator for use in fuel injection valves, for example.

### Background Art

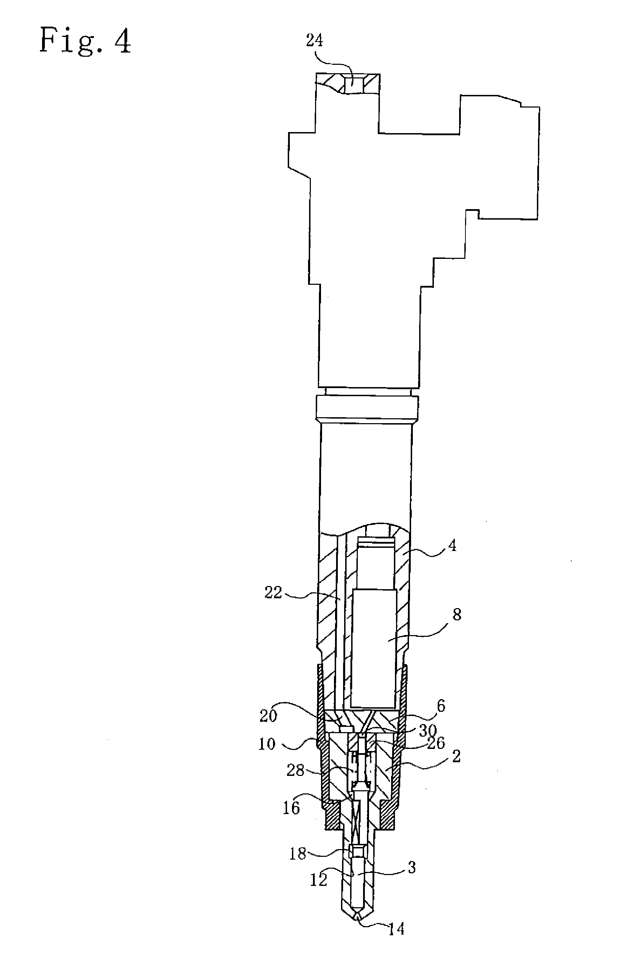

An example of electromagnetic actuators used in a fuel injection valve of a common rail system is disclosed in Patent Literature 1. The fuel injection valve disclosed in Patent Literature 1 is composed of components including a nozzle body 2, a needle 3, a holder body 4, an orifice plate 6, and an electromagnetic unit 8, as shown in Fig. 4. The nozzle body 2 is coupled by a retaining nut 10 to the lower end portion of the body holder 4 with the orifice plate 6 disposed therebetween. A guide hole 12 is formed in the nozzle body 2 to extend therethrough from the top end surface to the tip end of the nozzle body 2. The needle 3 is disposed in the guide hole 12 in such a manner that it can freely slide in the guide hole 12. An injection port 14 is formed in the tip end of the guide hole 12 through which fuel is injected when the needle 3 moves upward. A high-pressure path 16 is formed by a gap between the inner circumferential surface of the guide hole 12 and the outer circumferential surface of the needle 3. The high-pressure path 16 guides highly pressurized fuel to the injection port 14. At a location between the two ends of the guide hole 12, a fuel reservoir 18 is formed by enlarging the inner diameter of the guide hole 12. The upper end of the high-pressure path 16 opens in the top end surface of the nozzle body 2 and is connected to a high-pressure path 20 in the orifice plate 6. The high-pressure path 20 is connected via a high-pressure path 22 in the holder body 4 to a pipe joint 24 disposed at the upper end of the holder body 4, and the pipe joint 24 is supplied with high-pressure fuel from a common rail.

A cylindrical spring seat 26 is press-fitted into and secured to the guide hole 12, and a spring 28 is disposed between the spring seat 26 and the needle 3. The spring 28 urges the needle 3 in the direction to close the valve, or in the downward direction in Fig. 4. The inner circumferential surface of the spring seat 26 provides a back-pressure chamber 30 for providing a pressure of high-pressure fuel to the upper end surface of the needle 3 as a back pressure. This back pressure also urges the needle 3 in the valve-closing direction. The pressure of the high-pressure fuel in the fuel reservoir 18 urges the needle 3 in the direction to open the valve, or in the upward direction in Fig. 4.

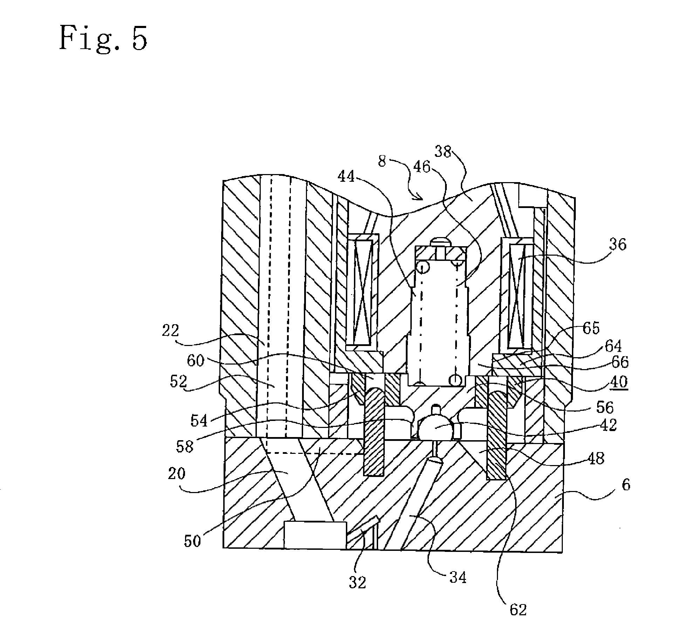

As shown in Fig. 5, an inlet path 32 and an outlet path 34 are formed in the orifice plate 6. The inlet path 32 is a path through which high-pressure fuel flows from the high-pressure path 20 into the back-pressure chamber 30, and an outlet path 34 is a path through which the high-pressure fuel flows from the back-pressure chamber 30 to a low pressure side.

The electromagnetic unit 8 is housed in the holder body 4. The electromagnetic unit 8 includes a stator 38 having an electromagnetic coil 36 wound around a plastic bobbin. The electromagnetic unit 8 includes also an armature 40 facing and movable relative to the stator 38. The electromagnetic unit 8 further includes a ball valve 42 movable with the armature 40 to open and close the outlet path 34. The stator 38 has, in its center, a vertically extending spring housing hole 44 in which a spring 46 is housed. The spring 46 presses the armature 40 so that the ball valve 42 is pressed toward the outlet path 34. The lower portion of the stator 38 functions as a valve chest in which the ball valve 42 is housed and which is filled with low-pressure fuel flowing from the outlet path 34. An annular groove 48 is formed in the upper surface of the orifice plate 6. A straight groove 50 extends outward from the annular groove 48, and the low-pressure fuel in the valve chest flows out into a low-pressure path 52 through the groove 50.

The armature 40 has a disc member 54, which is disposed to face the stator 38 and form a magnetic circuit with the stator 38. A pedestal 56 is formed in the center of the disc member 54, and an abutting portion 58 extends from the pedestal 56 toward the ball valve 42. The ball valve 42 sits in the abutting portion 58. A plurality of through-holes 60 are concentrically formed in the disc member 54. Guide pins 62 are inserted into some of the through-holes 60. The guide pins 62 are secured to the orifice plate 6. The through-holes 60 are formed at such locations as to interrupt the magnetic circuit formed by the disc member 54 and the stator 38. A magnetic member 64 is disposed on the lower surface of the electromagnetic coil 36. The magnetic member 64 is an annular member which is fitted over a projecting portion 66 formed in the lower portion of the stator 38, and extends from the outer periphery to the rise 65 of the stator 38. The magnetic member 64 is in contact with the projecting portion 66.

In a state where no electric power is being supplied to the electromagnetic coil 36, the ball valve 42 closes the outlet path 34, and, therefore, the hydraulic pressure in the back-pressure chamber 30 plus the force given by the spring 28 to urge the needle 3 in the direction to close the valve is larger than the hydraulic pressure in the fuel reservoir 18 which acts to urge the needle 3 in the direction to open the valve. Accordingly, the needle 3 closes the injection port 14 so that the fuel is not injected. When electric power is supplied to the electromagnetic coil 36, magnetic flux is generated around the electromagnetic coil 36, so that the stator 38 and the armature 40 are magnetized, causing the armature 40 to be attracted toward the stator 38. As a result, the armature 40 moves toward the stator 38 against the force of the spring 46, being guided by the guide pins 62. This causes the ball valve 42, receiving the hydraulic pressure in the back-pressure chamber 30, to open the outlet path 34 whereby the high-pressure fuel in the back-pressure chamber 30 is released into the valve chest of the ball valve 42. Then, the hydraulic pressure in the back-pressure chamber 30 decreases so that the force to move the needle 3 in the direction to open the valve becomes greater. This makes the needle 3 move upward so that the fuel is injected through the injection port 14.

### Prior Art Literature

### Patent Literature

Patent Literature 1: Japan Patent Publication 2010-174820A

### Summary of Invention

### Technical Problem to be Solved by the Invention

According to Patent Literature 1, when the electromagnetic coil 36 of the electromagnetic valve is energized, the magnetic flux generated by the electromagnetic coil 36 flows from the magnetic member 64 through the armature 40 to the projecting portion 66 of the stator 38, and also flows from the magnetic member 64 directly to the projecting portion 66. This means that only part of the magnetic force provided by the electromagnetic coil 36 can act to attract the armature 40. Then, the armature 40 cannot be swiftly moved toward the stator 38. Electromagnetic valves to be used in common rail systems are required to move at a high speed, but the technology disclosed in Patent Literature 1 cannot fulfill this requirement.

An object of the present invention is to provide an electromagnetic actuator having a higher operating speed.

### Means to Solve the Problem

According to one embodiment of the present invention, the electromagnetic valve includes a main body in which a coil is housed. A first magnetic member is disposed within the coil, and an armature adapted to be attracted by the coil is disposed, being spaced from the first magnetic member. An actuating part is formed integral with the armature. A second magnetic member is disposed on the armature side of the coil with a space disposed between the first and second magnetic members. It is desirable for the second magnetic member to overlap the armature in its portion, e.g. in its outer peripheral portion. Also, it is desirable for the armature to overlap the first magnetic member. The spacing between the first and second magnetic members is larger than the spacing between the armature and the coil.

The spacing between the first and second magnetic members of the electromagnetic actuator with the arrangement described is larger than the spacing between the armature and the first magnetic member. Therefore the magnetic flux which has been generated by the coil when it is energized and has passed through the second magnetic member hardly enters into the first magnetic member directly, but it enters into the armature and, then, into the first magnetic member. As a result, the armature is magnetized well and swiftly moves toward the first magnetic member. Accordingly, the actuating part formed on the armature also moves swiftly.

The end surface of the second magnetic member, which faces the first magnetic member may be formed to have its coil side located remoter from its first magnetic member side than its armature side. With such arrangement, the amount of the magnetic flux directed from the second magnetic member directly to the first magnetic member can be smaller, and a larger part of the magnetic flux can be directed to the armature, which results in faster movement of the armature.

### Advantageous Effect of Invention

As described above, an armature of an electromagnetic valve according to the present invention can move at a higher speed, and therefore an electromagnetic valve suitable for use in a common rail system, for example, can be provided.

### Brief Description of Drawings

[Figure 1] Fig. 1 is an enlarged cross-sectional view of part of an electromagnetic actuator according to an embodiment of the present invention.
[Figure 2] Fig. 2 is a further enlarged cross-sectional view of part of the electromagnetic actuator of Fig. 1.
[Figure 3] Fig. 3 is a transverse cross-sectional view of an armature used in the electromagnetic actuator of Fig. 1.
[Figure 4] Fig. 4 is a side view of a fuel injection valve in which an electromagnetic actuator according to a prior art is used.
[Figure 5] Fig. 5 is an enlarged cross-sectional view of part of the fuel injection valve of Fig. 4.

### Description of Embodiment

Like the above-described background art electromagnetic actuator, a electromagnetic actuator according to one embodiment of the present invention is used in a fuel injection valve for use in a common rail system. The electromagnetic actuator is arranged such that, when electric power is supplied to a coil thereof, an armature is moved to make a high-pressure fluid flow into a low-pressure path. The flow of the high-pressure fluid into the low-pressure path causes a nozzle, which is in a position to close an injection port, to move, which, in turn, causes the high-pressure fuel to be supplied to a cylinder of a diesel engine through the injection port.

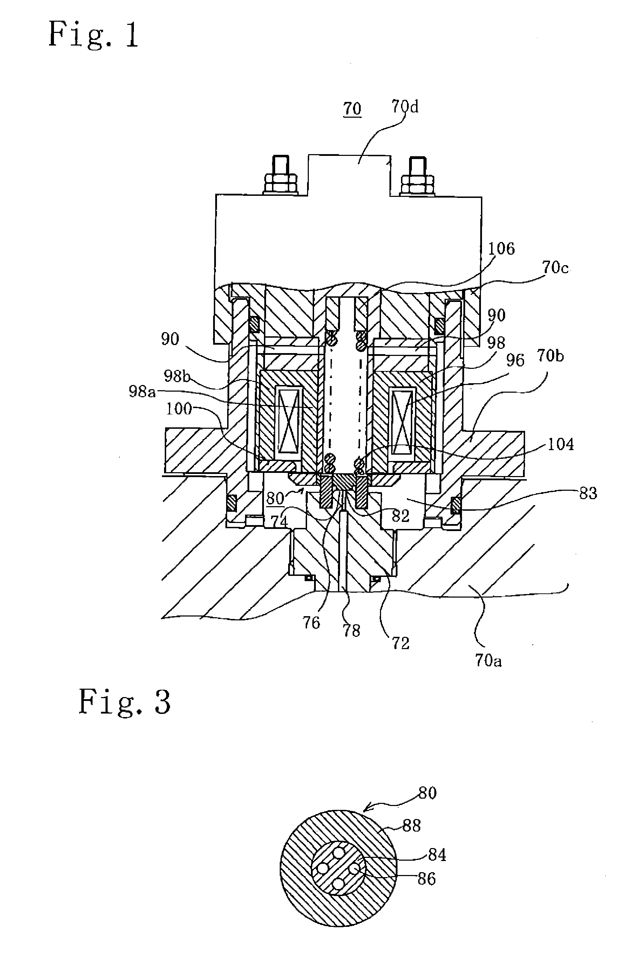

As shown in Fig. 1, the electromagnetic actuator has a main body part 70, which is composed of a base part 70a, a trunk part 70b, a connecting part 70c, a head part 70d, etc. In the upper end surface of the base part 70a, a depression having a step-shaped longitudinal cross-section is formed, and a valve seat providing member 72 is disposed in this depression. At the center of one end, the upper end in Fig. 1, of the valve seat providing member 72, a valve seat 74 is formed. An orifice 76 and an outlet path 78 are arranged to extend through the valve seat providing member 72 in the named order. The orifice 76 and the outlet path 78 form together the high-pressure path. A high-pressure fluid is supplied to the valve seat 74 through the high-pressure path.

An actuating part, e.g. a valve part 82, formed in the armature 80 is adapted to rest on the valve seat 74 to thereby close the valve seat 74. As will be described later, the armature 80 is movable in the upward and downward directions in Fig. 1, and, when the armature 80 is in the raised position, the valve part 82 is off the valve seat 74. When the valve part 82 is off the valve seat 74, the high-pressure fluid flowing out through the valve seat 74 flows out into the low-pressure path 83. The low-pressure path 83 is provided around the valve seat providing member 72 by part of the trunk part 70b extending into the above-described depression. The low-pressure oil in the low-pressure path 83 is let out through a path which is not shown. In the valve shown according to the above-described background art, the ball valve is used to open and close the valve seat, but, according to the embodiment being described, the valve part 82 formed integral with the armature 80 operates to open and close the valve seat 74. There is no need for forming, in the armature 80, the abutting portion to hold the ball valve, which is required for the valve of the background art, and, thus, the armature 80 according to the embodiment is lighter in weight than the one of the described background art.

The armature 80 has a high-strength portion 84 at its center, as shown in Fig. 3. The high-strength portion 84 is made of a high-strength material having relatively high strength, e.g. steel or titanium, and is disc-shaped. A plurality of guided portions, e.g. through-holes 86, are formed in the high-strength portion 84 by removing portions of the high-strength portion 84, e.g. by boring. The through-holes 86 extend through the high-strength portion 84 in the vertical direction in Fig. 1. For example, four through-holes 86 are formed, being spaced from each other in the circumferential direction and concentrically arranged. A magnetic portion 88 is formed around and in contact with the peripheral surface of the high-strength portion 84. The magnetic portion 88 is made of a magnetic material. For example, the magnetic portion 88 is a ring-shaped member made of compacted magnetic powder, and is fitted over the high-strength portion 84 to be integral therewith.

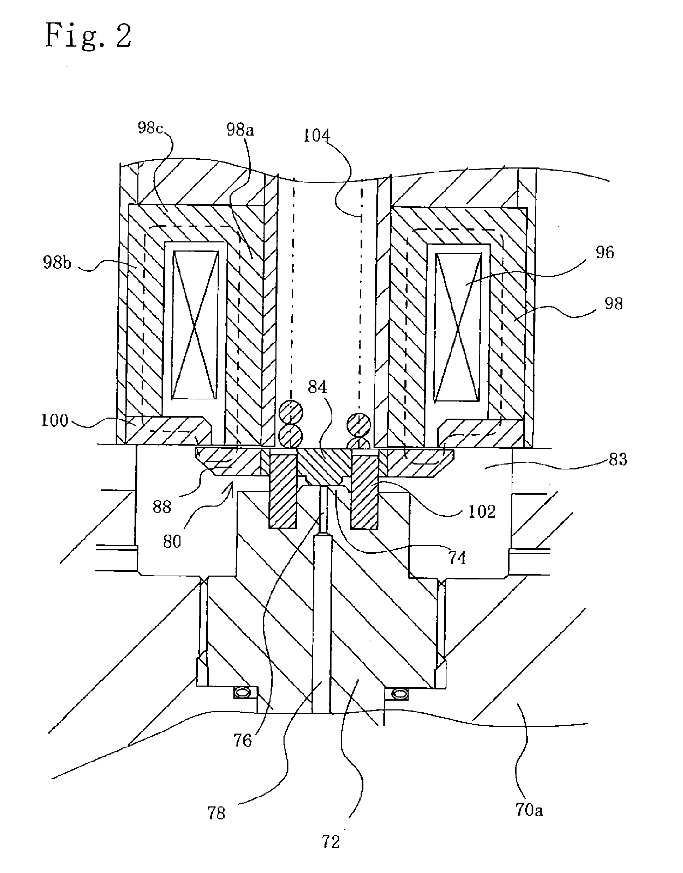

A coil 96 is disposed in a portion within the main body part 70 above the armature 80. The coil 96 is wound around a core 98, which functions as a stator. As shown in Fig. 2, the core 98 has, in its central portion, a first magnetic member, e.g. an inner cylindrical portion 98a. One end, e.g. a lower end, of the inner cylindrical portion 98a is located above the magnetic portion 88. An outer cylindrical portion 98b is disposed, being spaced from the inner cylindrical portion 98b, or, more specifically, outward of the outer periphery of the armature 80. One end, e.g. a lower end, of the outer cylindrical portion 98b is located at a level above the upper surface of the magnetic portion 88. The other ends, e.g. the upper ends, of the inner and outer cylindrical portions 98a and 98b are at the same level and are coupled to each other by a connecting portion 98c. The coil 96 is wound within the space formed between these cylindrical portions 98a and 98b.

The outer cylindrical portion 98b is shorter in length than the inner cylindrical portion 98a. A second magnetic member, e.g. an annular magnetic flux concentrating member 100, is disposed to extend from the lower end of the outer cylindrical portion 98b to a location near the inner cylindrical portion 98a. A gap is disposed between the inner circumferential surface of the magnetic flux concentrating member 100 and the inner cylindrical member 98a. The magnetic flux concentrating member 100 is in contact with the outer cylindrical portion 98b. When the coil 96 is de-energized, a gap is formed between the armature 80 and the inner cylindrical portion 98a. The gap between the inner circumferential surface of the magnetic flux concentrating member 100 and the inner cylindrical member 98a is larger than the gap formed between the armature 80 and the inner cylindrical portion 98a when the coil 96 is de-energized.

The inner edge of the magnetic flux concentrating member 100 on the side nearer to the coil 96 is beveled. The gap between the beveled portion and the inner cylindrical portion 98a is larger than the gap between the inner circumferential surface of the magnetic flux concentrating member 100 and the inner cylindrical portion 98a on the side nearer to the armature 80, and is gradually reduced from the largest gap at the location nearest to the coil 96 toward a location nearer toward the armature 80. In the portion which is not beveled, the gap between the magnetic flux concentrating member 100 and the inner cylindrical portion 98a is kept constant. Since the gap between the magnetic flux concentrating member 100 in its portion nearer to the coil 96 where the magnetic force is relatively large and the inner cylindrical portion 98a is large, the density of the magnetic flux extending from the portion nearer to the coil 96 of the magnetic flux concentrating member 100 directly to the inner cylindrical portion 98a can be low.

The outer periphery of the armature 80 extends outward of the inner periphery of the magnetic flux concentrating member 100, but not to the outer cylindrical portion 98b. In other words, the armature 80 and the magnetic flux concentrating member 100 overlap each other. The lower end of the inner cylindrical portion 98a is located above the magnetic portion 88 of the armature 80.

When the coil 96 is energized, the magnetic flux generated by the coil 96 concentrates on the outer cylindrical portion 98b, the magnetic flux concentrating member 100, the magnetic portion 88 of the armature 80, the inner cylindrical portion 98a and the connecting portion 98c, and thus the magnetic flux density is high, as indicated by broken lines in Fig. 2. On the other hand, because of the larger gap between the magnetic flux concentrating member 100 and the inner cylindrical portion 98a, the density of the magnetic flux directed from the magnetic flux concentrating member 100 directly to the inner cylindrical portion 98a is significantly low. Then, when the coil 96 is energized, the magnetic flux generated by the coil 96 passes through the armature 80 efficiently. As a result, the armature 80 is efficiently magnetized and attracted by the core 98 at a high speed. Since the armature 80 can be efficiently magnetized, there is no need to use an armature 80 having such a large diameter that its outer periphery would be located near the outer periphery of the outer cylindrical portion 98b. Thus, the armature 80 can be smaller. It should be noted that the shapes of the core 98 and the magnetic flux concentrating member 100 are not limited to the ones described above, but the components may be formed in other separate arrangements. For example, the magnetic flux concentrating member 100 and the outer cylindrical portion 98b may be formed integral with each other, with the inner cylindrical portion 98a and the outer cylindrical portion 98b formed as separate components.

Guides, e.g. guide pins 102 are inserted into predetermined ones of the above-described four through-holes 86 in the high-strength portion 84. For example, the guide pins 102 are inserted into two of the through-holes 86 which face each other across the center of the high-strength portion 84. The proximal ends of these guide pins 102 are placed in and secured to holes formed in the valve seat providing member 72. The guide pins 102 guide the armature 80 as the armature 80 moves upward or downward when the coil 96 is energized or de-energized, as described above. The through-holes 86 guided by the guide pins 102 are formed in the high-strength portion 84 where no cracks should be formed by forming the through-holes 86. As is seen in Fig. 2, the through-holes 86 are located in the high-strength portion 84 away from the portion of the armature 80 where the magnetic flux is concentrated when the coil 96 is energized. Thus, the through-holes 86 do not interrupt the concentration of the magnetic flux, and the armature 80 can move at a high speed.

Within the inner cylindrical portion 98a of the core 98, disposed is elastic means, e.g. a coil spring 104, of which one end is in contact with the magnetic portion 88 of the armature 80, and the other end of which is in contact with the head part 70d of the main body part 70 with a spring rest 106 disposed therebetween, as shown in Fig. 1. The coil spring 104 is compressed against its spring force when the armature 80 is raised in response to energization of the coil 96, and quickly lowers the armature 80 onto the valve seat 74 through its spring force in response to de-energization of the coil 96.

The through-holes 86 guided along the guide pins 102 of the electromagnetic actuator of the present invention are formed in the magnetic portion 88 of the armature 80, as described above, and the magnetic portion 88 is formed in an area where the density of magnetic flux from the coil 96 is low. Therefore the magnetic force acting to attract the armature 80 is not weakened by the presence of the through-holes 86, which further helps the armature 80 to be attracted at a high speed. Further, since the valve part 82 is formed integral with the armature 80, there is no need for forming an abutting portion on the armature 80 as in the prior art valve. Accordingly, the armature 80 can be light in weight and can move more quickly. The magnetic portion 88 of the armature 80 is made of compacted magnetic powder, which results in reduced eddy current. With eddy current reduced, the magnetic attractive force can be larger, which results in further quick movement of the armature 80. Since the electromagnetic actuator of this invention employs an arrangement in which a plurality of through-holes 86 are formed and the guide pins 102 are provided in some of them, one or more of the through-holes 86 well guided by the guide pins 102 can be selectively used. This results in improved guiding performance, and, can reduce the number of adjustments to be done to the through-holes 86 which otherwise would be required for improving the guiding performance. In addition, the through-holes 86 through which no guide pins 102 are inserted can function as oil releasers. When the armature 80 moves, oil is released out from or supplied to the space between the armature 80 and the coil 96 through the through-holes 86 with no guide pins inserted. In addition to the through-holes 86, holes 90 are formed above the coil 96, which operate to release oil like the through-holes 86 free of the guide pins 102.

The present invention has been described as being embodied in a fuel injection valve for a common rail system, but it is not limited to such use. The invention can be embodied in any other valves which are arranged to operate to flow a high-pressure fluid into a lower-pressure side when they are opened, or it can be arranged to open or close a contact in response to the movement of an actuating part other than a valve, e.g. the armature 80, toward the stator.

### Description of Reference Numerals

70: Main Body Part
74: Valve Seat
80: Armature
82: Valve Part (Actuating Part)
96: Coil
98a: Inner Cylindrical Portion (First Magnetic Member)
100: Magnetic Flux Concentrating Member (Second Magnetic Member)

## Claims

1. An electromagnetic actuator comprising:
a main body;
a coil housed in said main body;
a first magnetic member disposed inward of said coil
an armature adapted to be attracted by said coil, and disposed with a gap disposed between said first magnetic member and said armature;
a second magnetic member disposed on an armature side of said coil with a gap disposed between said second magnetic member and said first magnetic member; and
an actuating part formed integral with said armature;
said gap between said first magnetic member and said second magnetic member being larger than said gap between said armature and said first magnetic member.

2. An electromagnetic actuator according to Claim 1, wherein:
an end surface of said second magnetic member facing said first magnetic member is formed in such a manner that said end surface in a portion thereof nearer to said coil is farther from said first magnetic member than in a portion nearer to said armature.
